# EUROPÄISCHE PATENTANMELDUNG

(11) **EP 0 582 840 A1**
(43) Veröffentlichungstag der Anmeldung: **16.02.1994**
(21) Anmeldenummer: 93111112.4
(22) Anmeldetag: 12.07.1993
(51) Int. Cl.: G01N 1/22, G01N 1/24, G01N 1/26, G01N 15/06

(54) **Verfahren zum Messen von Schadstoffen in Gasen**

(30) Priorität: 24.07.1992 AT 1519/92
(71) Anmelder: AUSTRIAN ENERGY & ENVIRONMENT SGP/WAAGNER-BIRO GmbH, A-1210 Wien (AT)
(72) Erfinder: Wunderlich, Johannes, Dipl.-Ing., A-1211 Wien (AT); Bräunlich, Gangolf, Dr., A-8043 Graz (AT); Habitzl, Erich, Dipl.-Ing., A-2000 Stockerau (AT); Kahr, Gerhard, Dr., A-1211 Wien (AT)
(74) Vertreter: Wallner, Gerhard, Dipl.-Ing.

(57) **Zusammenfassung**

Verfahren zum Messen von Schadstoffen in Gasen, wobei ein Teilstrom des schadstoffbeladenen Gases isokinetisch entnommen, mit einem Verdünnungsgas gemischt und das Mischgas durch eine Meßfilter 5 geleitet wird. Während jeder Messung wird zwischen zumindest zwei durch fixe Sonden 2 gebildete Entnahmestellen, vorzugsweise automatisch über das Prozeßleitsystem 9 gesteuert, umgeschaltet, wobei die Messung kontinuierlich über die Gesamtemissionsdauer erfolgt. Vorzugsweise werden unterschiedliche Arten von Schadstoffen getrennt voneinander abgeschieden, beispielsweise gröbere Stäube in einem Vorfilter 8 und feinere Stäube sowie gasförmige Schadstoffe im eigentlichen Filter 7, sodaß aus dem Vorfilter 8 der Gehalt an Schwermetallen und aus der Kombination Vorfilter 8/Filter 7 die höhersiedenden Lipophile bestimmt werden können.

## Beschreibung

Die Erfindung betrifft ein Verfahren zum Messen von Schadstoffen in Gasen, insbesondere in Rauchgasen von Abfallverbrennungsanlagen, wobei zu jedem Zeitpunkt je ein Teilstrom des schadstoffbeladenen Gases an verschiedenen Stellen des Leitungsquerschnittes isokinetisch entnommen, mit einem anderen Gas bekannter Zusammensetzung gemischt und allenfalls gekühlt und das Mischgas durch ein Meßfilter für die Schadstoffe geleitet wird. Die Erfindung betrifft weiters eine Vorrichtung zur Durchführung des Verfahrens, umfassend eine Mischkammer für die Mischung eines von einer Sonde zur Entnahme eines Teilstromes eines schadstoffbeladenen Gases zugeführten sowie eines Gases bekannter Zusammensetzung, eine Meßfiltereinheit und ein Prozeßleitsystem.

Zur isokinetischen Probenentnahme von staubförmigen oder staubgebundenen Schadstoffen, speziell von polychlorierten Dioxinen und Furanen oder auch von Schwermetallen, sind getrennte diskontinuierliche Meßsysteme im Einsastz.

Bislang wird die Messung der Dioxin- und Schwermetallemissionen durch Mittelwertbildung aus drei diskontinuierlichen Einzelmessungen durchgeführt, die durch den verwendeten Brennstoff beeinflußbar sind. Daher ist eine genaue Ermittlung der tatsächlichen Emissionen durch Monatsmittelwerte mit diesen Verfahren nicht gewährleistet.

Für die Messung der gasförmigen Schadstoffe, wie beispielweise CO, SO₂, NOx oder Hg, sind bereits kontinuierliche Meßverfahren verfügbar. Für die Staubbestimmung sind kontinuerliche arbeitende optische Meßsysteme im Einsatz. Durch die verbesserte Technik der Staubabscheidung neuer Rauchgassysteme liegen die typischen Staubemissionen sehr oft nahe der Nachweisgrenze der derzeit verwendeten Meßsysteme, sodaß deren Genauigkeit bei länger andauerenden Messungen abnimmt.

Eine Aufgabe der Erfindung ist, die herkömmlichen Meßverfahren derart zu verbessern und eine kontinuierliche Überwachung der Emissionen von höhersiedenden Lipophilen, speziell von polychlorierten DibenzoparadioXinen und - furanen, polyzyklischen aromatischen Kohlewasserstoffen (PAH), polychlorierten Biphenylen (PCB) und Schwermetallen sowie Stäuben zu ermöglichen, womit eine Langzeitüberwachung der genannten Schadstoffe und die Bildung von echten Monatsmittelwerten möglich ist, wie sie der Gesetzgeber für andere Emissionswerte bereits vorschreibt. Die Emissionen an Staub und Schwermetallen als Bezugsgröße sind mitzubestimmen, weil der Staubgehalt gemeinsam mit den Schwermetallgehalten zur Beurteilung der Dioxinemissionen eine wesentliche Rolle spielt. Ferner soll beim angegebenen Meßverfahren auf Grundlage der angeführten Anforderungen entwickelten Verbesserungen ein funktionssicheres und einfaches System unter Ausschluß der Wirkung der Strähnenbildung angegeben werden, bei dem die Probennahme für die vorgeschriebenen Messungen auch bei großen Querschnitten der Gasleitung, beispielsweise bei Abgaskaminen, die geforderte Durchschnittsbildung über den Querschnitt eine sogenannte Netzmessung ermöglicht. Die Messung erfolgt automatisch und kann unbeaufsichtigt über eine lange Zeit erfolgen.

Bei dem in der DE-PS 31 36 646 beschriebenen Verfahren zum Messen von Feststoffen in Abgasen wird ein Teilstrom aus einem zu überwachenden Gasstrom entnommen und mit gefiltertem Kühlgas vermischt. Dann wird das Mischgas durch ein Meßfilter abgesaugt und sein Volumen unter Verwendung von Durchflußmessern und Gaszählern bestimmt. Es wird jedoch keinerlei Hinweis auf die Problematik von Langzeitüberwachungen und die Beeinflussung einzelner Meßwerte durch momentane Betriebsparameter der zu überwachenden Anlage gegeben. Auch über die simultane Überwachung mehrerer im Gas enthaltener Schadstoffe ist kein Hinweis enthalten. Die Netzmessung muß bei diesem Verfahren manuell durch den Meßtechniker durchgeführt werden. Dieses Verfahren ist also für automatische, unbeaufsichtigte Langzeitmessungen nicht geeignet.

Für die isokinetische Langzeitprobenahme von Stäuben ohne personelle Begleitung wurde im Artikel "Neuartiges Konzept zur automatisierten Probenahme staubförmiger Stoffe bei Stichprobenmessungen" von K-W. Bühne und W. Jockel, in "Staub, Reinhaltung der Luft, 51 (1991), S . 433 bis 438 eine Apparatur vorgeschlagen, welche nach dem Prinzip der Nulldrucksonde die Isokinetik einstellt und keinerlei Beimischung von Verdünnungsluft vorsieht. Dadurch wird der Staub bei höheren Temperaturen gesammelt, wodurch Dioxine und Furane während der Langzeitprobenahme wieder abdestillieren bzw. desorbieren. Eine Netzmessung ist wieder nur manuell durch den Meßtechniker möglich, sodaß eine unbeaufsichtigte Langzeitüberwachung der Schadstoffe nicht möglich ist. Darüberhinaus sind die bekannten Meßeinrichtungen bei Strähnenbildung im Abgas ungenau.

Um die geforderte echte Mittelwertbildung nicht nur bezüglich der Zeit, sondern auch des Querschnittes der Gasströmung (Netzmessung) bilden zu können, ist beim Verfahren vorgesehen, daß während jeder Messung zwischen zumindest zwei fixen Entnahmestellen desselben Leitungsquerschnitts umgeschaltet und jeweils lediglich ein Teilstrom der Mischkammer und dem Meßfilter zugeleitet wird. Damit wird den Tatsachen Rechnung getragen, daß in Gasleitungen, wie beispielsweise Rauchgaskaminen, sich über den Querschnitt unterschiedliche Strömungsbedingungen einstellen und daher eine punktuelle Probenentnahme an nur einer Stelle ein falsches Bild der Geamtschadstoffbelastung ergeben kann. Die automatische Umschaltung zwischen fixen Entnahmestellen erlaubt in baulich einfacher weise das Ersetzen der manuellen Netzmessung, sodaß eine unbeaufsichtigte, automatische Langzeitüberwachung möglich ist.

Um die zuvor erwähnte Durchschnittsbildung über den Querschnitt in einfacher Weise durchführen zu können, ist gemäß einem weiteren Merkmal der Erfindung vorgesehen, daß automatisch, vorzugsweise mit definierter Taktfrequenz, zwischen den fixen Entnahmestellen umgeschaltet wird. Gemäß einem weiteren Merkmal der Erfindung werden im Meßfilter mehrere Arten von Schadstoffen vor der Ermittlung des Volumenstromes des Mischgases abgeschieden, was eine einfache Bestimmung des gesamten Schadstoffgehaltes des Abgases bei der nachfolgenden Analyse des Meßfilters ermöglicht. Darüberhinaus ist ein Quervergleich der Emissionswerte (Dioxine, Furane : Staubgehalt : Schwermetalle) und eine bessere Beurteilung der Meßwerte bei Inbetriebsetzung und Störfällen von Rauchgasreinigungsanlagen möglich. Für die Probennahme und Überwachung ist anstatt bisher drei nur ein Meßsystem und ein Prozeßleitsystem notwendig, sodaß sich eine wesentliche Vereinfachung und wirtschaftlichere Ausführung ergibt.

Gemäß einer vorteilhaften Variante des erfindungsgemäßen Verfahrens wird vorgeschlagen, daß zumindest einige der unterschiedlichen Schadstoffarten getrennt voneinander in verschiedenen Untereinheiten des Meßfilters abgeschieden werden. Dies gestattet die optimale Anpassung der Analyse an die unterschiedlich abgeschiedenen Schadstoffarten und deren exakte Bestimmung ohne gegenseitige Beeinflussung der Messungen. Auch können die einzelnen Untereinheiten optimal an die einzelnen Schadstoffarten und deren bevorzugte Abscheidebedingungen angepaßt werden.

Vorteilhafterweise werden zuerst partikelförmige Schadstoffe oberhalb einer vorgegebenen Größe, anschließend verbliebene partikelförmige Schadstoffe und höhersiedende Lipophile, insbesondere Dioxine, Furane PAH und PCB, und schließlich die sauren Rauchgasbestandteile, wie Salzsäure und/oder Schwefeldioxid, abgeschieden. Die gröberen Stäube können vor der Extraktion mit Säure behandelt werden, was die nachfolgende Analytik erleichtert.

Die Bildung von echten Monatsmittelwerten wird möglich, wenn die Entnahme je eines Teilstromes und die Abscheidung der Schadstoffe kontinuierlich über die gesamte Emissionsdauer des schadstoffbeladenen Gases erfolgt, sodaß die gesetzlich vorgeschriebenen Überwachungen der Emissionswerte in einfacher Weise möglich sind. Auch können kontinuierliche Staubmessungen nach dem optischen Prinzip unter Einsatz des erfindungsgemäßen Verfahrens überprüft werden. Bei den üblichen Meßverfahren wird eine Meßsonde von einem Meßtechniker manuell entlang des Querschnitts der Gasleitung bewegt, um an unterschiedlichen Stellen der Gasleitung Proben zu entnehmen. Dies ist sehr aufwendig und für die Langzeitüberwachung nicht brauchbar. Die Vorrichtung zur Durchführung des beschriebenen Verfahrens ist gemäß einem weiteren Merkmal der Erfindung durch zumindest zwei, vorzugsweise beheizte Sonden gekennzeichnet, welche an verschiedenen Stellen des Querschnittes der Leitung für das schadstoffbeladene Gas fix eingebaut und absperrbar mit einer gemeinsamen Mischkammer verbunden sind.

Gemäß einer vorteilhaften Variante ist dabei jede Sonde mit je einem separat absperrbaren Ventil versehen. Jedoch können auch alle Sonden mit einem einzigen gemeinsamen Umschaltventil verbunden sein, das jeweils eine Verbindung zwischen je einer Sonde und der Mischkammer freigibt. Das (die) Ventil(e) sind vorzugsweise mit dem Prozeßleitsystem verbunden und wird (werden) von diesem zur vorzugsweise taktweisen Umschaltung zwischen den einzelnen Sonden angesteuert. Die Umschaltung kann in Intervallen von 3 Sekunden bis 8 Stunden, vorzugsweise zwischen 15 Sekunden und 15 Minuten erfolgen.

Gemäß einem weiteren Merkmal der Erfindung mündet die Mischkammer in eine Meßfiltereinheit, welche aus einem Vorfilter zur Abscheidung von Partikeln von 0,2 bis 300 µm, vorzugsweise 1 bis 10 µm, und einem Filter zur Abscheidung kleinerer Partikel und gasförmiger Schadstoffe besteht. Im Vorfilter werden partikelförmige Rauchgasbestandteile, wie beispielsweise Stäube und Schwermetalle, teilweise auch höhersiedende Lipophile, abgeschieden, die wie oben erwähnt vor der Extraktion mit Säure behandelt werden. Nach diesem Vorfilter werden noch gasförmig vorliegende Rauchgasbestandteile sowie kleinere Partikel, d.h. der Hauptanteil an höhersiedenden Lipophile, insbesondere polychlorierte Dibenzoparadioxine, polychlorierte Dibenzoparafurane, polyzyklische aromatische Kohlenwasserstoffe (PAH) und polychlorierte Biphenyle (PCB), abgeschieden und der Analyse zugeführt. Dadurch ist eine simultane Bestimmung der Staubmenge, der Schwermetallgehalte und des Dioxin-Toxitätsäquivalentes in einem gemeinsamen Prozeß unter Einbeziehung eines Meß- und Regelsystemes und einer Meßanlage möglich.

Eine baulich einfache und nicht aufwendige Lösung ergibt sich, wenn das Vorfilter ein Planfilter ist. Wenn das Probenahmefilter ein vorzugsweise paraffinimprägnierter Faltenfilter ist ergibt sich eine gute Abscheideleistung.

Eine Verringerung der Dimensionen des Meßfilters ist möglich, wenn das Probnahmefilter eine XAD-Kartusche ist. Durch die Verwendung von Schnellkupplungen ist der Wechsel des Meßfilters eine vernachlässigbare Unterbrechung der Probenahme, sodaß bei Langzeitüberwachung die Bildung der echten Mittelwerte kaum beeinflußt wird.

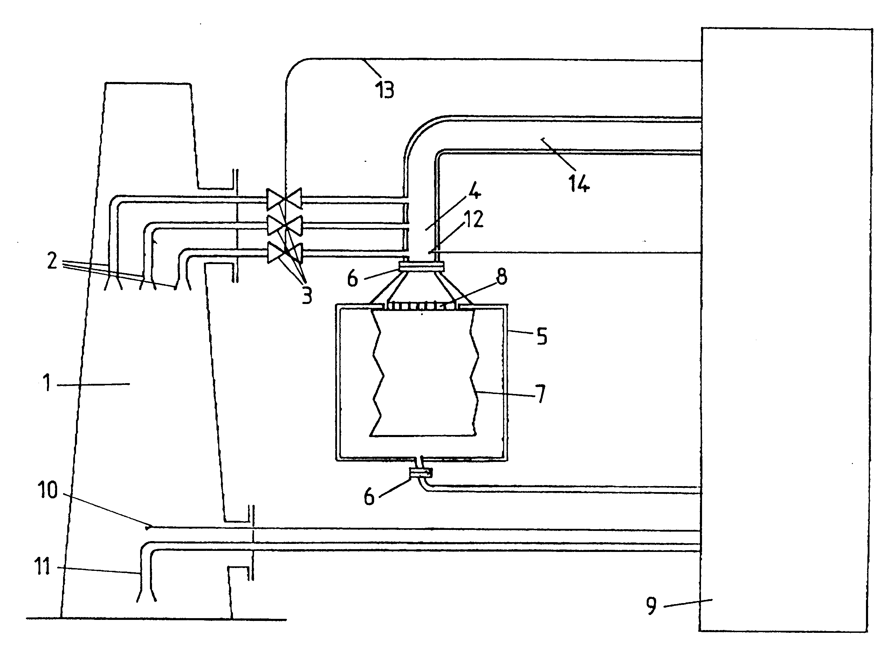

In der nachfolgenden Beschreibung wird unter Bezugnahme auf die beigefügte Zeichnung ein bevorzugtes Ausführungsbeispiel der Erfindung näher erläutert.

An verschiedenen Stellen über den Querschnitt der Leitung 1, beispielsweise Abgaskamin einer Müllverbrennungsanlage, verteilt sind mehrere beispielsweise drei Sonden 2 zur Entnahme eines Probegasvolumens fix montiert und mit je einem absperrbarem Ventil 3, insbesondere Magnetventil, versehen. Jede der Sonden 2 mündet in einen als Mischkammer ausgebildeten Leitungsabschnitt 4, in dem das entnommene Probegasvolumen mit einem Kühlgas bekannter Zusammensetzung vermischt und dabei auf eine Temperatur abgekühlt wird, bei der in der nachfolgenden Meßfiltereinheit 5 die günstigsten Abscheidebedingungen für die zu überwachenden Schadstoffe gegeben sind.

Die Meßfiltereinheit 5 ist mittels Schnellkupplungen 6 in die Anlage eingesetzt, um einen raschen Austausch und damit eine möglichst vernachlässigbare Unterbrechung der Probeentnahme zu gewährleisten. Die Meßfiltereinheit 5 besteht aus einer kompakten Probenahmeeinheit, in der zur Abscheidung der gasförmigen Schadstoffe und feiner Partikel unter einer bestimmten Größe ein vorzugsweise paraffinimprägniertes Faltenfilter 7 eingesetzt ist. Vor diesem Faltenfilter ist als Vorfilter 8 ein Planfilter zur Abscheidung gröberer Stäube vorgesehen. Durch die Verknüpfung von Dioxin-, PAH-, Schwermetall- und Staubsammlung in der kompakten Meßfiltereinheit 5 können neben den gasförmig vorliegenden Dioxinen und Furanen auch an Stäuben angelagerte Dioxine und Furane sowie angelagerte Schwermetalle erfaßt und die gemessenen Dioxinwerte daher besser interpretiert werden. Das System eignet sich daher für eine simultane, kontinuierliche Überwachung von Dioxin- und Schwermetallemissionen unter Beachtung der dabei vorgesehenen einschlägigen Normen.

Ein Prozeßleitsystem bzw. eine Meß- und Regeleinheit 9 sichert Einhaltung der Isokinetik, d.h. die geschwindigkeitsgleiche Probeentnahme aus dem schadstoffbeladenen Gasstrom durch die Sonden 2 und zur Einstellung der gewünschten Temperatur des Mischgases vor dessen Eintritt in das Meßfilter 5, um dort die optimale Abscheidung der Schadstoffe zu garantieren. Zu diesem Zweck ist das Prozeßleitsystem 9 einerseits mit einem oder mehreren Sensoren 10, 11 im Abgaskanal 1 und einem Temperatursensor 12 vor der Eintrittsstelle des Mischgases in das Meßfilter 5 verbunden. Der Sensor 10 kann beispielsweise als Prandtl-Rohr ausgeführt sein und direkt der Ermittlung der Geschwindigkeit das Gases dienen. Natürlich kann die Geschwindigkeit aber auch aus anderen Daten und Meßgrößen in der Leitung 1 vom Prozeßleitsystem 9 errechnet werden.

Da der Wasser-, SO₂- und HCI-Gehalt die Langzeitverfügbarkeit bzw. Betriebssicherheit einschränken können, werden die Inhaltsstoffe im Meßfilter 5 abgeschieden. Das Prozeßleitsystem 9 greift über eine Steuerleitung 13 steuernd auf die absperrbaren Ventile 3 der Sonden 2 ein, um die geforderte Umschaltung zwischen den Sonden zur Probeentnahme aus unterschiedlichen Stellen eines Kaminquerschnittes zu gewährleisten. Diese Variante bietet die Möglichkeit gestörte Sonden 2 automatisch festzustellen und programmgesteuert zu sperren. Die taktweise Ansteuerung der Ventile 3 kann aber auch durch beliebige herkömmliche Steuereinrichtungen auf automatischer Basis erfolgen. Auch die Zuführung vom Verdünnungsgas in die Mischkammer 4 über die Leitung 14 wird vom Prozeßleitsystem direkt gesteuert, gleich aus welcher Quelle dieses Gas kommt.

## Patentansprüche

1. Verfahren zum Messen von Schadstoffen in Gasen, insbesondere in Rauchgasen von Abfallverbrennungsanlagen, wobei zu jedem Zeitpunkt je ein Teilstrom des schadstoffbeladenen Gases an verschiedenen Stellen des Leitungsquerschnittes isokinetisch entnommen, mit einem anderen Gas bekannter Zusammensetzung gemischt und allenfalls gekühlt und das Mischgas durch ein Meßfilter für die Schadstoffe geleitet wird, dadurch gekennzeichnet, daß während jeder Messung zwischen zumindest zwei fixem Entnahmestellen (2) desselben Leitungsquerschnittes umgeschaltet und jeweils lediglich ein Teilstrom der Mischkammer (4) und dem Meßfilter (5) zugeleitet wird.

2. Verfahren nach Anspruch 1, dadurch gekennzeichnet, daß automatisch vorzugsweise mit definierter Taktfrequenz, zwischen den fixen Entnahmestellen (2) umgeschaltet wird.

3. Verfahren nach Anspruch 1, dadurch gekennzeichnet, daß im Meßfilter (5) mehrere Arten von Schadstoffen vor einer Ermittlung des Volumenstromes des Mischgases abgeschieden werden.

4. Verfahren nach Anspruch 3, dadurch gekennzeichent, daß zumindest einige der unterschiedlichen Arten von Schadstoffen getrennt voneinander in verschiedenen Untereinheiten (7, 8) des Meßfilters (5) abgeschieden werden.

5. Verfahren nach Anspruch 4, dadurch gekennzeichnet, daß zuerst partikelförmige Schadstoffe oberhalb einer vorgegebenen Größe, anschließend verbliebene partikelförmige Schadstoffe und höhersiedende Lipophile, insbesondere Dioxine, Furane, PAH'S und PCB's, und schließlich die sauren Rauchgasbestandteile, wie Salzsäure und/oder Schwefeldioxid, abgeschieden werden.

6. Verfahren nach einem der vorangehenden Ansprüchen, dadurch gekennzeichnet, daß die Entnahme je eines Teilstromes und die Abscheidung der Schadstoffe kontinuierlich über die gesamte Emissionsdauer des schadstoffbeladenen Gases erfolgt.

7. Vorrichtung zur Durchführung des Verfahrens nach Anspruch 1, umfassend eine Mischkammer für die Mischung eines von einer Sonde zur Entnahme eines Teilstromes eines schadstoffbeladenen Gases zugeführten sowie eines Gases bekannter Zusammensetzung, eine Meßfiltereinheit und ein Prozeßleitsystem, gekennzeichnet durch zumindest zwei, vorzugsweise beheizte Sonden (2), welche an verschiedenen Stellen des Querschnittes der Leitung (1) für das schadstoffbeladene Gas fix eingebaut und absperrbar mit einer gemeinsamen Mischkammer (4) verbunden sind, wobei insbesondere jede Sonde (2) mit je einem separat absperrbaren Ventil (3) versehen ist und die Ventile (3) mit einem Prozeßleitsystem (9) verbunden sind und von diesem zur taktweisen Umschaltung zwischen den einzelnen Sonden (2) angesteuert werden.

8. Vorrichtung nach Anspruch 7, dadurch gekennzeichnet, daß alle Sonden (2) mit einem einzigen, gemeinsamen Umschaltventil verbunden sind, das jeweils eine Verbindung zwischen je einer Sonde (2) und der Mischkammer (4) freigibt.

9. Vorrichtung nach Anspruch 7, dadurch gekennzeichnet, daß die Mischkammer (4) in einer Meßfiltereinheit (5) mündet, die aus einem Vorfilter (8) zur Abscheidung von partikelförmigen Schadstoffen von 0,2 bis 300 µm, vorzugsweise von 1 bis 10 µm, und einem Filter (7) zur Abscheidung kleinerer partikelförmiger und gasförmiger Schadstoffe besteht und daß vorzugsweise die Meßfiltereinehit (5) mittels Schnellkupplungen (6) in die Apparatur eingesetzt ist.

10. Vorrichtung nach Anspruch 9, dadurch gekennzeichnet, daß das Vorfilter (8) ein Planfilter und das Filter (7) ein paraffinimprägniertes Faltenfilter ist.
